# EUROPÄISCHE PATENTSCHRIFT

(11) **EP 3 285 346 B1**
(45) Veröffentlichungstag und Bekanntmachung des Hinweises auf die Patenterteilung: **08.07.2020**
(21) Anmeldenummer: 16185661.2
(22) Anmeldetag: 25.08.2016
(51) Int. Cl.: H02G 3/22, H02G 15/013, F21V 27/02

(54) **DICHTE KABELEINFÜHRUNG FÜR EIN BAUELEMENTGEHÄUSE**
SEALED CABLE ENTRY FOR A COMPONENT HOUSING
PASSAGE ÉTANCHE D'UN CÂBLE POUR UN BOÎTIER DES COMPOSANTS

(30) Priorität: 19.08.2016 DE 102016115451
(43) Veröffentlichungstag der Anmeldung: 21.02.2018
(73) Patentinhaber: BEGA Gantenbrink-Leuchten KG, 58708 Menden (DE)
(72) Erfinder: GATENBRINK, Heinrich J., 58708 Menden (DE); DREES, Alexander, 58638 Iserlohn (DE)
(74) Vertreter: Grünecker Patent- und Rechtsanwälte PartG mbB

(56) Entgegenhaltungen:
- EP-A1- 0 449 088
- EP-A1- 2 445 073
- EP-A2- 0 662 735
- DE-B3-102004 020 162
- FR-A- 1 473 304
- GB-A- 2 104 736
- JP-Y1- S4 124 918

## Beschreibung

Die vorliegende Erfindung betrifft eine Kabeleinführung für ein Bauelementgehäuse mit einem Abstandselement und mit einer mehrere isolierte Einzeladern umfassenden Kabelleitung, wobei die Einzeladern durch das Abstandselement getrennt und geführt sind und ein isolationsschichtfreier Bereich der Einzeladern wenigstens abschnittsweise mit einer Vergussmasse abgedichtet ist.

Insbesondere betrifft die vorliegende Erfindung eine Vorrichtung sowie ein Verfahren zur dichten Einführung von elektrischen Leitungen in ein Gehäuse, beispielsweise eine Bodeneinbauleuchte. Bei entsprechenden Leuchten ist es zwingend notwendig auszuschließen, dass über die Leitungen Feuchtigkeit in das Innere der Leuchte eingebracht wird. Zwar kann die von außen über den Kabelmantel eindringende Feuchtigkeit durch relativ einfache Mittel ausgeschlossen werden, problematischer stellt sich jedoch die im Inneren des Kabels zugeführte Feuchtigkeit dar. In diesem Zusammenhang kann durch Kapillarwirkung nicht nur zwischen den einzelnen Adern Feuchtigkeit mitgeführt werden, sondern auch zwischen der Kupferleitung und der diese umgebende Isolation.

Im Stand der Technik sind verschiedenste Arten bekannt, dichte Einführungen für elektrische Leitungen bereitzustellen. Eine sehr verbreitete Art, eine dichte Kabeleinführung zu erzielen, ist die Verwendung einer sogenannten mechanischen Kabelverschraubung. Hierbei wird die Leitung durch diese Verschraubung eingeführt und selbige anschließend mechanisch gespannt. Eine entsprechende Spannung kann beispielsweise durch das Anziehen einer Überwurfmutter erfolgen. Durch die Verschraubung wird in der Regel ein mehrheitlich radial auf die Leitung wirksamer Spannungszustand erzeugt. Die Erzeugung und Übertragung dieser Spannungen kann durch Gummielemente in der Verschraubung erfolgen. Durch den erzeugten radialen Druck wird zwischen dem Mantel der Leitung, den Gummielementen und einem Gehäuse oder einem festen Teil der Verschraubung eine Abdichtung erzielt.

Ein Vorteil einer entsprechenden Kabelverschraubung ist es, dass die entstehende Verbindung lösbar ist, und dass die Leitung einfach ausgewechselt werden kann. Auf der anderen Seite kann es jedoch durch die hohen radialen Spannungen und den dadurch entstehenden mehrachsigen Spannungszustand in der Verschraubung häufig zu Beschädigungen an den Gummielementen oder an dem Mantel der Leitung kommen. Insbesondere die Gummielemente, aber auch das Material der Mantelleitung versuchen einem bestehenden permanenten Druck entgegenzuwirken, in dem sich das Material langsam aber stetig beispielsweise durch Fließen verlagert, um so der Spannung entgegenzuwirken. Sobald das Material der permanenten Spannung entgegenwirkt, ist es jedoch notwendig, die Verschraubung nachzujustieren, d.h. erneut anzuspannen, um die notwendige Dichtigkeit zu erhalten.

Eine entsprechende Nachspannung ist jedoch nur zu einem begrenzten Maße möglich, da die Verschraubung keine weitere Drehung mehr zulässt, oder da das Gummimaterial bereits erheblich beschädigt wurde. Zu diesem Zeitpunkt ist es folglich notwendig, die gesamte Kabelverschraubung nebst der Gummielemente auszuwechseln. Zudem kann unabhängig von der Stärke der Verschraubung und dem erzeugten Spannungszustand nicht sichergestellt werden, dass tatsächlich eine vollständige Dichtigkeit erzielt wird, da zwischen dem Mantel und dem Gehäuse nach wie vor Wasser eintreten kann.

In diesem Zusammenhang kann insbesondere Wasser durch die Kapillarwirkung zwischen die Bereiche zwischen Einzelader und Mantel eintreten, jedoch auch zwischen der Kupferleitung und der Aderisolierung.

Es besteht folglich eine Forderung nach erhöhter Dichtigkeit, zum Beispiel bei dem Einsatz entsprechender Kabeleinführungen, im Bereich von Bodeneinbauleuchten. Hierbei ist es häufig notwendig, die Kabelverschraubung zusätzlich mit einem Wasserstopper zu kombinieren.

Eine entsprechende Anordnung befindet sich in der Regel außerhalb des Leuchtengehäuses und unterbricht alle Kapillaren der Leitung. Dies erfolgt meist durch Entfernen sämtlicher Isolierungen der Leitung und Vergießen der "blanken" Einzelleitern, bei flexiblen Einzelleitern werden diese zusätzlich mit Lötzinn überzogen bzw. zusammengeschweißt oder vercrimpt. Auf diese Weise ist es möglich, sämtliche Kapillaren zu unterbrechen, so dass Wasser nicht mehr innerhalb der Leitung bis in das Gehäuse gelangen kann.

Ein weiterer Nachteil des außerhalb liegenden Wasserstoppers ist, dass zwischen Leuchtengehäuse und Wasserstopper ein ungeschützter Bereich des Kabels vorhanden ist. Bei Beschädigungen der Mantelleitung in diesem Bereich kann Feuchtigkeit entlang des Kabels in die Leuchte eintreten.

Ferner ist es zur Herstellung einer dichten Kabeleinführung bekannt, die Leitung direkt in einem Gehäuse zu vergießen. Hierbei wird oftmals auf der Innen- oder Außenseite des Gehäuses eine Kavität angeformt. In dieser Kavität wird die Leitung dann mechanisch fixiert und durch einen Gehäusedurchbruch auf die jeweils andere Seite des Gehäuses geführt. Anschließend wird die Kavität mit einer Vergussmasse aufgefüllt. Hierbei ist der Gehäusedurchbruch im Verhältnis zur Leitung derartig eng gestaltet, dass die Masse nicht durchtreten kann. Diese Anordnung kann daher auch als Wasserstopper ausgeführt sein, so dass auch kapillarer Wassertransport zuverlässig ausgeschlossen werden kann.

Obwohl eine entsprechende Kabeleinführung eine gute Dichtwirkung bereitstellt, überwiegen jedoch in der Regel die Nachteile, insbesondere da eine entsprechende Kabeleinführung auf Dauer mit dem Gehäuse verbunden ist, so dass ein nachträgliches Austauschen der Leitung unmöglich wird. Folglich ist es in diesem Fall notwendig, das gesamte Bauelement, beispielsweise eine Bodeneinbauleuchte, zu entfernen. Ferner ist das direkte Vergießen der Leitung in einem Gehäuse an die genauen Parameter, d.h. Größe des Gehäusedurchbruchs, wie auch Leitungsart gebunden, so dass für jede Leitung ein entsprechendes Gehäuse mit den entsprechenden Abmessungen zur Verfügung gestellt werden muss, um hier ein möglichst enges Durchführen der Leitung zu gewährleisten.

Eine Kabeldurchführung zur Realisierung einer dichten Durchführung eines, wenigstens eine Einzelader aufweisenden, Kabelelementes ist beispielsweise aus der DE 199 21 564 A1 bekannt. Hierbei wird die oder jede Einzelader im Bereich ihrer axialen Erstreckung durch die Durchgangsöffnung zur Bildung eines von der Isolationsschicht freien Bereichs der Einzelader abisoliert, um wenigstens einen Teilbereich des freigelegten Kabels mit einer Vergussmasse zur Abdichtung zu vergießen. Als Vergussmasse kann beispielsweise Kunstharz eingesetzt werden. Gemäß einer Ausführungsform kann vorgesehen sein, dass die Einzelader, sowohl im Bereich des noch isolierten, als auch im Bereich des abisolierten Bereichs vollständig mit der Vergussmasse umgeben ist, wobei eine entsprechende Ausführungsform nur für die Realisierung dichter Kabeldurchführungen mit einer geringen Anzahl von Einzeldrähten geeignet ist.

Aus der DE 10 2009 060 564 A1 ist eine andere Steckerverbindungsanordnung für feuchtigkeitsgeschützte elektrische Steckverbindungen bekannt. Hierbei werden die einzelnen Adern eines elektrischen Leitungskabels zunächst von der Außenummantelung befreit und dann an den Enden die Einzelummantelung abisoliert. Nach dem Verbinden mit Kontaktträgern kann von der Vorderseite bzw. Oberseite des Steckers aus durch eine dafür vorgesehene Öffnung, in den inneren Hohlraum des Steckers eine Vergussmasse eingefüllt werden, die sowohl den Kontaktbereich der abisolierten Einzeladern, die Einzeladern mit Isolierung, sowie das elektrische Kabel umgibt. Hierdurch soll eine Kapillarwirkung entlang des Leitungskabels und der elektrischen Kontakte und Undichtigkeiten vermieden werden.

Die US 6,10 4,855 offenbart ein Anschlusselement für ein optisches Kabel, wobei ein Stopfen vorgesehen ist, um die einzelnen optischen Fasern des optischen Kabels innerhalb eines Gehäuses zu fixieren und zu unterstützen. Zu diesem Zweck weist der Stopfen Durchtrittsöffnungen auf, durch die die Einzelkabel geführt werden können.

Die EP2445073 A1 zeigt eine Stromanschlussvorrichtung mit einer Kabeleinführung, die ein inneres Gehäuse definiert, einem in dem Gehäuse angeordneten elektrischen Kabel und einer Isolationsschicht. Eine isolationsfreie Länge des elektrischen Kabels ist im Gehäuse angeordnet. Ein isolierendes Füllmaterial des Gehäuses umschließt das elektrische Kabel und die isolationsfreie Länge, und befindet sich zwischen dem elektrischen Kabel und einer Innenseite der Kabeleinführung.

Aufgabe der vorliegenden Erfindung ist es, eine Kabeleinführung bereitzustellen, welche die Nachteile des Standes der Technik überwindet, und einen einfachen Austausch der Leitung ermöglicht. Ferner soll eine Kabeleinführung bereitgestellt werden, die vielseitig einsetzbar ist, d.h. nicht von vorgegebenen spezifischen Kabeldurchmessern bzw. Gehäusedurchmessern, wie auch von der Aderanzahl abhängig ist.

Diese Aufgabe wird durch die Erfindung, d. h. eine Kabeleinführung gemäß Anspruch 1 gelöst. Die abhängigen Ansprüche definieren Ausführungsbeispiele. Eine Kabeleinführung ist für ein Bauelementgehäuse mit einem Abstandselement und mit einer mehrere isolierte Einzeladern umfassenden Kabelleitung, wobei die Einzeladern durch das Abstandselement getrennt und geführt sind und ein isolationsschichtfreier Bereich der Einzeladern wenigstens abschnittsweise mit einer Vergussmasse abgedichtet ist, dadurch beschrieben, dass das Abstandselement radial an seiner Außenoberfläche offene Aufnahmekanäle zur Aufnahme der Einzeladern aufweist, der isolationsschichtfreie Bereich jeder Einzelader innerhalb der Aufnahmekanäle angeordnet ist und wenigstens die Aufnahmekanäle sowie die darin geführten Einzeladern vollständig durch die Vergussmasse abgedichtet sind.

Das Abstandselement stellt hierbei eine sehr einfache Lösung dar, die Einzelkabel nicht nur gezielt voneinander zu trennen und zu führen, sondern diese auch in definierten Bereichen durch Vergussmasse abzudichten. Hierdurch wird ein vollständiger Schutz gegen Feuchtigkeitseintritt durch das Kabel erzielt.

Durch die Bereitstellung von Aufnahmekanälen an der Außenoberfläche des Abstandselementes wird die Einführung der Einzeladern in die Aufnahmekanäle erheblich vereinfacht, da diese nur um das Abstandselement geführt werden müssen. Hierbei kann der Durchmesser der Aufnahmekanäle so ausgebildet sein, dass die Einzeladern unterschiedlichster Kabelleitungen aufgenommen werden können, sodass das Abstandselement flexibel für unterschiedlichste Kabelleitungen einsetzbar ist. Da die Einzelader abschnittsweise abisoliert sind, kann die Vergussmasse auch zwischen die Isolationsschicht und die Drahtleitung eindringen, und so eine besonders gute Abdichtung erzielen. Die Vergussmasse sorgt nicht nur für eine Abdichtung, sondern gleichzeitig auch für die Fixierung der Einzelader innerhalb eines hohlen Durchführungskörpers.

Hierbei kann die Kabeleinführung des Weiteren einen hohlen Durchführungskörper zur Aufnahme des Abstandselementes aufweisen. Auf diese Weise kann die Anordnung des Abstandselements vereinfacht werden. Sofern kein Durchführungskörper vorhanden ist, kann das Kabel durch eine Werkzeugform gehalten und abgedichtet werden. Die Außenkontur des Durchführungskörpers wird dann durch das Werkzeug geformt.

Gemäß einer bevorzugten Ausführungsform, werden die Einzeladern strahlenförmig von der Kabelleitung weggeführt, und in die Aufnahmekanäle an der Außenoberfläche des Abstandselementes eingelegt. Das Abstandselement kann hierbei einfach in Normgrößen gefertigt werden. Es kann jedoch auch ein Material eingesetzt werden, welches sich bei Ausüben von Druck in seiner Größe bzw. Form leicht verändert, um so mit unterschiedlichen Durchführungskörpern zu kooperieren.

Vorteilhafterweise kann sich der Querschnitt der Aufnahmekanäle von der Außenoberfläche des Abstandselementes zum Kanalboden kontinuierlich verringern. Durch diese Ausführungsform ist es möglich eine Festlegung der Einzelkabel im Bereich der Aufnahmekanäle zu erzielen, da diese nur in die Kanäle eingedrückt werden müssen, bis der Querschnitt des Aufnahmekanals in etwa dem Durchmesser der Einzelkabel entspricht. Folglich ist auch eine entsprechende Ausbildung des Aufnahmekanals für Einzelkabel unterschiedlichster Durchmesser geeignet. Sofern das Einzelkabel nicht bis zum Kanalboden gedrückt werden kann, wird dieses zunächst zwischen den Wänden des Aufnahmekanals gehalten, und anschließend der möglicherweise vorhandene Hohlraum durch die Vergussmasse verschlossen.

Gemäß einer weiteren bevorzugten Ausführungsform können die Aufnahmekanäle mit einem halbrund oder rechteckig ausgebildeten Bodenbereich versehen sein. Hierbei entspricht die Rundung der Form der Einzeladern, sodass diese einfach in Anlage mit dem Bodenbereich gebracht werden können. Im Gegensatz zu einem flach ausgebildeten Boden kann durch den runden Boden die Kontaktfläche zwischen dem Aufnahmekanal und der Einzelader erhöht werden. Der rechteckig ausgebildete Bodenbereich ist dagegen beim Vergießen des Aufnahmekanals von Vorteil.

Ferner kann vorgesehen sein, dass jeder Aufnahmekanal an einem Ende des Abstandselementes einen Eingangsbereich aufweist, welcher im Querschnitt größer als der restliche Aufnahmekanal ausgebildet ist. Ein entsprechender vergrößerter Eingangsbereich, d.h. der Bereich, der der Kabelleitung unmittelbar gegenüberliegt, vereinfacht das Einführen des Einzelader, da mehr Spiel zur Verfügung steht, wodurch die Positionierung der Einzelader im Bereich des gesamten Abstandselementes erheblich vereinfacht wird. Gleichermaßen wirkt sich dieser breitere Eingangsbereich auch positiv beim Vergießen der Vergussmasse aus.

Gemäß einer anderen bevorzugten Ausführungsform kann sich zwischen jeweils zwei Aufnahmekanälen eine sich parallel zu diesen erstreckende Rinne vorgesehen sein. Insbesondere können entsprechende Rinnen über die ganze Außenoberfläche des Abstandselementes jeweils zwischen den Aufnahmekanälen angeordnet sein. Entsprechende Rinnen haben sich insbesondere während des Vergießens der Vergussmasse bewährt, da hierdurch ein verbesserter Austausch zwischen Luft und Vergussmasse gewährleistet wird.

Eine weitere Ausführungsform kann vorsehen, dass das Abstandselement des Weiteren wenigstens eine sich der Länge nach durch das Abstandselement erstreckende Bohrung aufweist. Auch diese Ausführungsform erleichtert das Auffüllen des Abstandselementes sowie des hohlen Durchführungskörpers mit der Vergussmasse. Sofern die zusätzliche Bohrung mittig in dem Abstandselement angeordnet ist, ist die Bohrung in der Regel in einer Linie zu der Kabelleitung ausgerichtet, sodass die durch die Bohrung dringende Vergussmasse direkt auf die Kabelleitung, insbesondere den Bereich, von dem sich die einzelnen Adern weg erstrecken, gerichtet werden kann. Gleichzeitig mit der Isolierung der Einzelader in den Aufnahmekanälen kann folglich auch eine Isolation der eigentlichen Kabelleitung erfolgen, so dass Kriechwasser zwischen den einzelnen Adern im Bereich der Kabelleitung ausgeschlossen werden kann.

Der Abstandshalter kann gemäß einer anderen bevorzugten Ausführungsform als Buchse einer Steckverbindung ausgebildet sein. In diesem Fall kann die Einführung der Vergussmasse seitlich erfolgen.

Ferner kann vorgesehen sein, dass der hohle Durchführungskörper als ein das Abstandselement aufnehmendes Gehäuse ausgebildet ist, mit einer von dem Abstandselement beabstandeten Durchtrittsöffnung für die Kabelleitung. Durch die Bereitstellung eines entsprechenden Gehäuses ist es möglich, die Kabelleitung mit daran angeordnetem Gehäuse vorab wasserdicht bereitzustellen, welches dann einfach in das gewünschte Bauelement eingebaut werden kann, oder für einen Austausch bereitsteht.

Der Durchführungskörper kann jedoch auch als Zwei-Komponenten-Teil ausgebildet sein. Auf diese Weise können Dichtringe sowie eine zuverlässige Abdichtung des Kabels zum Vergießen direkt mit angespritzt werden.

Hierbei hat sich bewährt, wenn an der Innenwand des Gehäuses ein Halteabschnitt zur Anlage des Abstandselementes im Inneren des Gehäuses ausgebildet ist. Auf diese Weise kann das Abstandselement an gewünschter Position angeordnet werden, wodurch auch das Einfüllen der Vergussmasse erleichtert wird. Insbesondere kann sichergestellt werden, dass ausreichend Vergussmasse zwischen Abstandselement und Eingang der Kabelleitung bereitgestellt wird. Ferner kann das Gehäuse wenigstens im Bereich einer Aufnahmeöffnung der Kabelleitung dicht ausgebildet sein. Diese Ausführungsform zielt darauf ab, dass der Abstandshalter mit montierter Kabelleitung in einem Gehäuse zumindest von einer Seite aus dicht montiert wird.

Es ist bevorzugt, wenn die Außenabmessung des Abstandselements so ausgebildet ist, dass sie im Wesentlichen der Innenabmessung des Gehäuses entspricht. Wenn das Gehäuse und das Abstandselement im Wesentlichen passgenau hergestellt sind, kann das Abstandselement in das Gehäuse eingeführt werden, ohne dass es zu einem Verkanten kommt. Hierdurch kann insbesondere sichergestellt werden, dass die entsprechende Kombination aus Gehäuse und Abstandselement durch die Vergussmasse dicht miteinander verbunden wird.

Eine andere Ausführungsform kann vorsehen, dass der Abstandshalter, sowie ein zwischen dem Abstandshalter und der Eintrittsöffnung der Kabelleitung in dem Gehäuse vorhandener Hohlraum, durch die Vergussmasse vollständig abgedichtet wird.

Ferner kann vorgesehen sein, dass eine Seite des Gehäuses mit einem Steckerelement ausgebildet ist. Hierdurch wird ein leichter Austausch des Elementes unterstützt. Gleichzeitig wird auch die Installation erheblich vereinfacht.

Gemäß einer bevorzugten Ausführungsform kann die Kabeleinführung als Leitungseinführung für ein Leuchtengehäuse, insbesondere eine Bodenleuchte, eingesetzt werden.

Ferner kann die erfindungsgemäße Kabeleinführung als ein Wasserstopper eingesetzt werden. Der Aufbau stellt sicher, dass kein Wasser über eine zu verlegende Leitung eindringen kann und ist daher insbesondere für Anwendungen geeignet, bei denen Leitungen in feuchten Umgebungen geführt und angeschlossen werden.

Gemäß eines Verfahrens wird zunächst der Kabelmantel einer Kabelleitung an einem Ende auf ein vorbestimmtes Maß gekürzt. Sofern die Kabelleitung noch nicht in ein Leergehäuse eingeführt wurde, kann dies zu diesem Zeitpunkt erfolgen. Die nunmehr freiliegenden Einzeladern werden voneinander weggebogen und ein Abschnitt der Einzeladern abisoliert, so dass die Kupferleitung freiliegt. Ggf. können die Kupferleitungen verschweißt oder getrennt und anschließend vercrimpt werden. Anschließend werden die Einzeladern um das Abstandselement gelegt, wobei jede Einzelader in einen Aufnahmekanal eingelegt wird. Der isolationsschichtfreie Abschnitt jeder Einzelader liegt im Bereich des Aufnahmekanals, unter einem vorbestimmten Abstand zu jedem Ende des Abstandselementes. Zwischen dem Ende des Kabelmantels, d.h. dem Austritt der Einzeladern und dem Abstandselement ist Spiel vorhanden, so dass die Kabel nicht unter Spannung stehen.

Nachdem die Einzeladern in ihren jeweiligen Positionen um das Abstandselement angeordnet sind, kann das Gehäuse, sofern vorhanden, von der Seite der Kabelleitung aus über das Abstandselement geschoben werden, bis das Abstandselement vollständig von dem Gehäuse aufgenommen ist. Vorzugsweise ist im Inneren des Gehäuses ein Anschlag für das Abstandselement, beispielweise in Form eines Vorsprungs, ausgebildet, so dass die Positionierung des Abstandselementes vereinfacht wird. Durch die Aufnahme des Abstandselementes in das Gehäuse werden gleichzeitig die Einzeladern fixiert, die die Innenwand des Gehäuses die Aufnahmekänale verschließen.

Anschließend wird von oben, d.h. von dem der Kabelleitung gegenüberliegenden Ende des Gehäuses, eine flüssige Vergussmasse eingefüllt. Das Einfüllen erfolgt hierbei so, dass einerseits die Luft aus den Hohlräumen innerhalb des Gehäuses austreten kann und dass die Aufnahmekanäle, wie auch der Bereich zwischen dem Abstandselement und dem Eintritt der Kabelleitung, in das Gehäuse vollständig eingefüllt werden. Die Vergussmasse umschließt und versiegelt hierbei die isolationsfreien Bereiche der Einzeladern und dringt auch zwischen die Einzeladern im Bereich des entfernten Kabelmantels ein. Auf diese Weise kann eine vollständige Dichtigkeit gegenüber flüssigen Medien gewährleitet werden.

Eine erfindungsgemäße Kabeleinführung kann folglich das Kabel vollständig zum Gehäuse abdichten, sowohl bezogen auf den Kabelmantel, als auch auf die Kapillaren in der Leitung. Das Gehäuse lässt sich problemlos und zuverlässig dichtend in ein Leuchtengehäuse einsetzten, da die mechanische Montage der Teile "auf Block" erfolgt und mit einfachen O-Ringen erfolgen kann. Es sind folglich weder teure Spezialelemente noch aufwändige Arbeitsschritte notwendig. Kriechende Dichtungen oder Undichtigkeiten durch Lagerfehler im weichen Gummi können ausgeschlossen werden. Die so eingeführten Leitungen sind auswechselbar und das Vorgehen kann an verschiedene Durchmesser- und Leitungstypen angepasst werden.

Eine bevorzugte Ausführungsform der vorliegenden Erfindung wird nachfolgend unter Bezugnahme auf die beigefügten Zeichnungen näher erläutert. Es zeigt:
- Figur 1: eine Kabelleitung sowie ein Abstandselement, gemäß eines Ausführungsbeispiels,
- Figur 2: ein Abstandselement, gemäß eines Ausführungsbeispiels,
- Figur 3: ein Gehäuse zur Aufnahme des in der Figuren 1 und 2 dargestellten Abstandselementes,
- Figur 4: eine Kabeleinführung, gemäß eines Ausführungsbeispiels, umfassend die in Figur 1 dargestellten Elemente, sowie ein umgebendes Gehäuse,
- Figur 5: die in Figur 4 dargestellte Kabeleinführung nach dem Abdichten durch die Vergussmasse und
- Figur 6: die in den Figuren 1-5 dargestellte Kabeleinführung nach dem Einbau in ein Leuchtengehäuse.

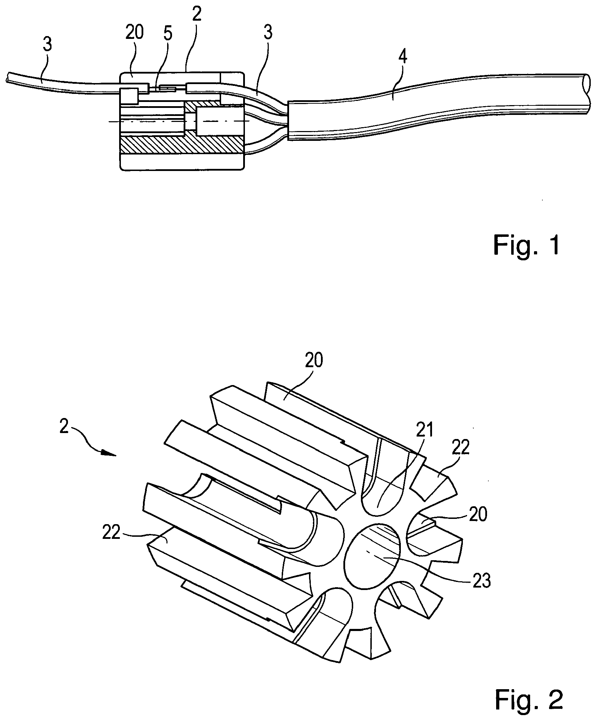

Die in Figur 1 dargestellte Kabelleitung 4 umfasst einen Verbund mit Isolierstoffen ummantelter Einzeladern, welche von einem Kabelmantel umgeben werden. An einem Ende der Kabelleitung 4 ist der Kabelmantel entfernt, und die Einzeladern 3 frei zugänglich.

Die Einzeladern 3 werden unter einem gewissen Abstand von dem Kabelmantel mit Hilfe eines Abstandelementes 2 voneinander getrennt. Dieses Abstandselement dient neben der Trennung der Einzeladern im Wesentlichen auch zu deren Führung.

Hierbei ist das Abstandelement 2 im Detail in Figur 2 dargestellt. Wie deutlich wird, handelt es sich bei dem Abstandselement um ein längliches, im Wesentlichen kreisförmig ausgebildetes Element, welches an seiner Außenoberfläche eine Vielzahl sich parallel zueinander der Länge nach erstreckende Aufnahmekanäle 20 aufweist. Die Aufnahmekanäle 20 sind in gleichmäßigen Abständen über die Oberfläche voneinander beabstandet und erstrecken sich über eine vorbestimmte Tiefe in den Abstandshalter 2 hinein. Jeder Aufnahmekanal ist im Querschnitt U-förmig mit einem gerundet geformten Bodenbereich 21 ausgebildet.

An einem Ende ist der Aufnahmekanal 20 mit größeren Abmessungen ausgebildet, d.h. im Bereich eines Endes erstreckt sich der Aufnahmekanal tiefer in das Abstandselement 2 hinein und bildet dann eine Stufe als Übergang zu dem restlichen Aufnahmekanal. Im Einsatz werden die Einzeladern 3 in die Aufnahmekanäle eingelegt und so voneinander getrennt gehalten. Da die Aufnahmekanäle zur Außenoberfläche offen ausgebildet sind, kann dieser Vorgang einfach und schnell durchgeführt werden.

In der Außenoberfläche des Abstandselementes 2 sind ferner Rinnen 22 angeordnet, welche jeweils zwischen zwei Aufnahmekanälen parallel zu diesen angeordnet sind. Hierbei erstrecken sich die Rinnen 22 auch in das Abstandselement hinein, sind jedoch nicht so tief wie die Aufnahmekanäle ausgebildet. In der dargestellten Ausführungsform weisen die Rinnen 22 im Querschnitt auch eine U-Form auf, wobei sich die einzelnen Schenkel jedoch unter einem Winkel zueinander erstrecken, der Bodenbereich folglich im Wesentlichen flach ausgebildet ist. Die Abmessungen der Rinnen 22 bleiben über das ganze Abstandselement unverändert.

Das Abstandselement 2 ist ferner mit einer Durchtrittsöffnung 23 ausgebildet, welche sich in etwa mittig durch den Körper des Abstandselementes von einem Ende zu dem anderen erstreckt. Diese Durchtrittsöffnung kann beispielsweise von einer Bohrung gebildet werden.

Wie bereits ausgeführt und in Figur 1 dargestellt, wird jede Einzelader 3 im Bereich eines Aufnahmekanals 20 angeordnet. Hierbei trägt der halbrund ausgebildete Bodenbereich 21 des Aufnahmekanals zur einfachen Positionierung bei. Die Abmessungen des Aufnahmekanals 20 sind solchermaßen ausgewählt, dass die Einzelader 3 samt Isolierung locker in den Aufnahmekanal eingelegt werden kann, ohne in diesen eingeklemmt zu werden. Sofern notwendig, kann sich der Aufnahmekanal jedoch zum Bodenbereich 21 hin verjüngen, um so eine Klemmwirkung im unteren Bereich zu erzielen.

Gemäß einer anderen Ausführungsform kann der Bodenbereich 21 jedoch auch eckig ausgebildet sein.

Jede Einzelader 3 weist einem vorbestimmten Abschnitt auf, der bis auf die Kupferleitung 5 abisoliert ist, wobei der abisolierte Bereich in der dargestellten Ausführungsform vollständig innerhalb des Aufnahmekanals 2 angeordnet ist, d.h. ist mit einem vorbestimmten Abstand zu den beiden Enden des Abstandselementes 2 angeordnet, sodass im Bereich der Enden nur mit Isolation versehene Abschnitte der Einzelkabel angeordnet sind.

Der isolationsfreie Bereich kann jedoch auch in der unmittelbaren Umgebung des Abstandselementes angeordnet sein.

Gleichermaßen ist es auch möglich, eine Verbindungsstelle zwischen zwei Einzeladern in dem Bereich des Abstandselementes 2 anzuordnen. In diesem Fall würde der abisolierte Abschnitt 5 durch die Verbindungsstelle zweier Einzelkabel ersetzt werden, wobei auch die Verbindungsstelle abisoliert wäre. In diesem Fall würden die Einzeladern vor dem Einführen in die Aufnahmekanäle getrennt und anschließend durch ein geeignetes Verfahren wieder miteinander verbunden werden.

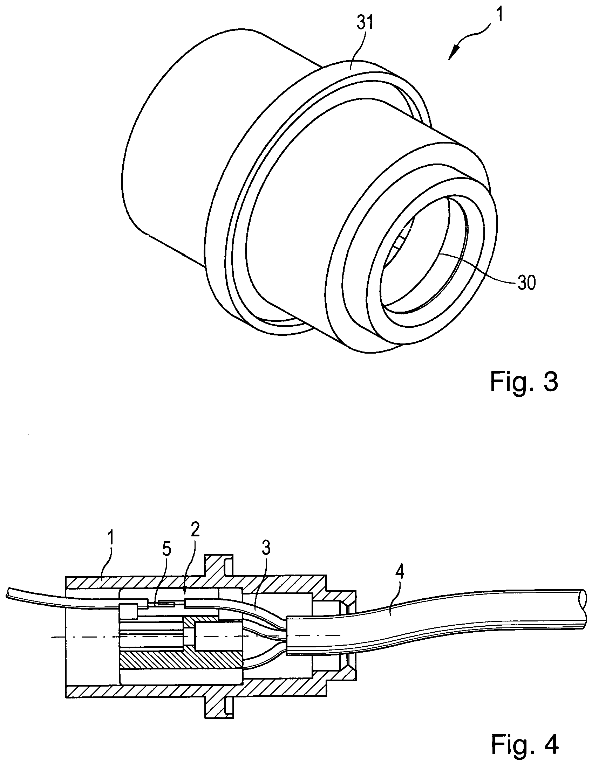

Die in Figur 1 dargestellte Kombination zwischen Abstandselement 2 und Kabelleiter 4 wird anschließend in ein Gehäuse 1 eingeführt, welches in Figur 3 dargestellt ist. Bei dem Gehäuse 1 handelt es sich um einen hohlen Durchführungskörper, welcher vorzugsweise einstückig ausgebildet ist. Insbesondere ist das Gehäuse 1 im Wesentlichen rohrförmig ausgebildet, mit einem sich im Wesentlichen über das ganze Gehäuse erstreckenden Längsabschnitt mit gleich bleibendem Innendurchmesser sowie einer Aufnahmeöffnung 30, welche an einem Ende des Gehäuses angeordnet ist, und sich durch eine Verringerung des Innendurchmessers auszeichnet. Zusätzlich kann an dem Außenumfang noch ein Halteelement 31 ausgebildet sein, welches sich radial um das Gehäuse erstreckt. Im Bereich der Aufnahmeöffnung 30 ist das Gehäuse auch an seiner Außenseite mit einem verringerten Durchmesser ausgebildet.

Figur 4 zeigt das Gehäuse 1 im Querschnitt, nebst darin aufgenommener Kabelleitung 4 und Abstandselement 2. Es wird deutlich, dass die Kabelleitung 4 im Bereich der Aufnahmeöffnung 30 in das Gehäuse 1 eingeführt ist. Der mit einem Kabelmantel versehene Bereich erstreckt sich über einen vorbestimmten Abstand über den Aufnahmebereich mit verringertem Durchmesser in das Gehäuse hinein, das heißt bis in den Bereich mit kontinuierlich gleichbleibendem Innendurchmesser. Von dem Ende des Kabelmantels ausgehend, werden die freigelegten Einzeladern voneinander weggebogen und sind in den Aufnahmekanälen des Abstandselementes 2 aufgenommen. Hierbei ist das Abstandselement 2 mit etwas Abstand zu dem Kabelmantel angeordnet, so dass die einzelnen Adern bequem, d.h. ohne Zug auf diese auszuüben, in die Aufnahmekanäle eingeführt werden können.

Der Außenumfang des Abstandselementes 2 stimmt im Wesentlichen mit dem Innendurchmesser des Gehäuses 1 überein, und kann daher in das Gehäuse eingeführt werden, ohne dass viel Spiel vorhanden ist. Hierdurch wird nicht nur das Abstandselement 2 im Bereich des Gehäuses gehalten, sondern auch die Position der Einzeladern 3 in den Aufnahmekanälen 20 fixiert. Die Innenwand des Gehäuses 1 verschließt somit die Aufnahmekanäle, wie auch die zwischen diesen angeordneten Rinnen 22. Der Durchmesser der beiden Elemente kann hierbei auch so gewählt werden, dass die beiden Elemente im Wesentlichen wie eine Steckverbindung ineinander geführt werden.

Um den Abstand zwischen Aufnahmeöffnung 30 und dem Abstandselement 2 definiert zu gestalten, kann im Bereich der Innenfläche des Gehäuses 1 eine Stufe ausgebildet sein, die einen Anschlag für das Abstandselement 2 darstellt. Eine entsprechende Stufe kann beispielsweise durch eine leichte Veränderung des Innendurchmessers erzielt werden, so dass sich der Innendurchmesser von dem die Aufnahmeöffnung 30 aufweisenden Ende bis zum gegenüberliegenden Ende in Stufen vergrößert.

Die Einzeladern 3, die in den Aufnahmekanälen 2 angeordnet sind, werden an den der Aufnahmeöffnung 30 gegenüberliegenden Ende aus dem Abstandselement 2 und dem Gehäuse 1 herausgeführt und dann ihrem gewünschten Verwendungszweck zugeführt.

Nachdem das Abstandselement 2 sowie die Kabelleitung in das Gehäuse eingeführt wurden, sind die einzelnen Adern zwar fixiert, die Gesamtverbindung weist jedoch noch keine Dichtigkeit auf. Um nunmehr die gewünschte Dichtigkeit zur Außenseite, d.h. zu der Aufnahmeöffnung 30 hin, zu erzielen, werden die einzelnen Adern im Bereich des Abstandselementes 2 mit einer Vergussmasse 6 fixiert. Zu diesem Zweck wird eine geeignete Vergussmasse von dem offenen Ende des Gehäuses 1 mit großem Durchmesser, d.h. dem der Aufnahmeöffnung 30 gegenüberliegenden Ende, eingefüllt. Die Vergussmasse dringt während des Gießens nicht nur in die Aufnahmekanäle 20 ein, sondern fließt gleichermaßen entlang der Rinnen und der mittig angeordneten Bohrung 23 in den Hohlraum zwischen Abstandselement 2 und Aufnahmeöffnung 30.

Eine rechteckige Ausbildung des Bodenbereichs 21 der Aufnahmekanäle unterstürzt hierbei das Umgießen der Kabel, da die Vergussmasse besser um die Kabel fließen kann.

Da die Durchtrittsöffnung 23 im Bereich des Abstandselementes 2 im Wesentlichen in einer Linie zu der Kabelleitung angeordnet ist, kann ein Strahl der Vergussmasse auch direkt auf diesen Bereich gerichtet werden, so dass die oberhalb des Kabelmantels austretenden Einzeladern in ihrer jeweiligen Position fixiert werden können, und etwaig vorhandene Zwischenräume zwischen den einzelnen Adern im Bereich des Kabelmantels verschlossen werden.

Da der Durchmesser der Aufnahmeöffnung 30 vorzugsweise größer gewählt wird als der Durchmesser der Kabelleitung, wird die in dem Bereich zwischen Abstandselement 2 und Aufnahmeöffnung 30 vorhandene Luft zwischen Aufnahmeöffnung und Kabelleitung nach außen gedrückt, während die Vergussmasse 6 in diesem Bereich eintritt. Sofern eine Kabelleitung 4 mit größerem Außendurchmesser verwendet wird, sodass kaum Spiel zwischen Aufnahmeöffnung 30 und der Außenseite der Kabelleitung besteht, kann diese Luft jedoch auch durch die bereitgestellten Rinnen 22 nach oben dringen. In diesem Fall kann durch punktuelle Injektion der Vergussmasse das Einbringen der Vergussmasse und gleichzeitige Aufsteigen der Luft gezielt beeinflusst werden.

Während des Einführens der Vergussmasse ist es von besonderer Wichtigkeit, dass die einzelnen Adern 3, bzw. die abisolierten Kupferleitungen 5, vollständig von der Vergussmasse umgeben werden. Die Vergussmasse verschließt dann vollständig die Bereiche zwischen der Isolierung und der Kupferleitung und verhindert somit, dass Wasser über Kapillarwirkung in das Gehäuse bzw. das Bauelement eindringt. Durch Aushärten der Vergussmasse 6 wird folglich sichergestellt, dass entlang des Kabels der Durchfluss eines Mediums, wie Wasser, verhindert wird.

Die Vergussmasse 6 wird vorzugsweise vollständig in das Gehäuse eingeführt, das heißt bis zum offenen breiten Ende, sodass auch die Einzelkabel noch in der nicht mehr vom Abstandselement 2 gehaltenen Position in der Nähe des Innendurchmessers zusätzlich fixiert werden. Das Gehäuse 1 ist folglich vollständig mit der Vergussmasse ausgefüllt.

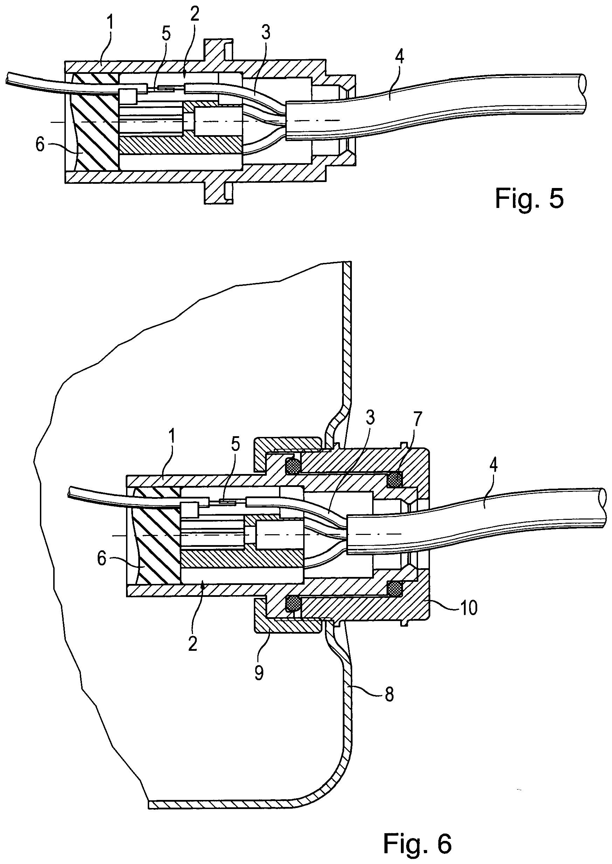

Figur 6 zeigt schließlich den Einbau eines resultierenden Gehäuses 1 mit Kabelleitung 4 und ausgehärteter Vergussmasse 6 in ein Leuchtengehäuse 8. Zu diesem Zweck wird das Gehäuse an dafür vorgesehenen Positionen mit Dichtungen 7 versehen, die dann mit entsprechenden Elementen im Bereich des Leuchtengehäuses für eine dichte Positionierung sorgen. Entsprechende Positionen für die Dichtungen 7 sind einerseits der Haltering 31 an der Außenseite des Gehäuses 1, der zusätzlich noch mit einer Aufnahmenut an der zur Aufnahmeöffnung 30 gerichteten Fläche ausgebildet sein kann. Hierdurch wird ein einfaches kontrolliertes Anordnen einer entsprechenden Dichtung erzielt. Eine zweite Dichtung kann zusätzlich an der zwischen Aufnahmeöffnung 30 und Außenumfang des Gehäuses 1 entstehenden Stufe 34 angeordnet werden.

Vorzugsweise erfolgt die Befestigung und Abdichtung des Gehäuses 1 im Bereich des Leuchtengehäuses 8 durch eine Mutter 9, die durch ein zuvor dicht mit dem Leuchtengehäuse 8 verbundenen Bauteil mit Gewinde 10 fest gezogen werden kann.

Das Gehäuse 1 kann jedoch auch direkt durch ein geeignetes Verfahren wie beispielsweise Kleben oder Verschweißen mit dem Leuchtengehäuse 8 verbunden werden.

Obwohl in der vorliegenden Ausführungsform nicht dargestellt, kann das Gehäuse an einem Ende zusätzlich mit einer Steckverbindung ausgebildet sein, um hierdurch einen sehr einfachen elektrischen Anschluss der elektrischen Komponenten im dichten Gehäuse zu ermöglichen.

## Patentansprüche

1. Kabeleinführung für ein Bauelementgehäuse mit einem Abstandselement (2) und mit einer mehrere isolierte Einzeladern (3) umfassenden Kabelleitung (4), wobei die Einzeladern (3) durch das Abstandselement (2) getrennt und geführt sind und ein isolationsschichtfreier Bereich der Einzeladern (3) wenigstens abschnittsweise mit einer Vergussmasse abgedichtet ist, wobei das Abstandselement (2) als ein sich in Längsrichtung erstreckendes, im wesentlichen rund ausgebildetes Element ausgebildet ist, welches radial an seiner Außenoberfläche offene, sich der Länge nach erstreckende Aufnahmekanäle (2) zur Aufnahme der Einzelkabel (3) aufweist, die sich eine vorbestimmte Tiefe in das Abstandselement hineinerstrecken,
wobei die Kabeleinführung darin gekennzeichnet ist, dass
die Aufnahmekanäle (20) unter einem vorbestimmten Abstand zueinander der Länge nach in der Außenoberfläche des Abstandselementes ausgebildet sind,
dass der isolationsschichtfreie Bereich jeder Einzelader (3) innerhalb der Aufnahmekanäle (20) angeordnet ist,
dass die Aufnahmekanäle (2) sowie die darin geführten Einzeladern (3) vollständig durch die Vergussmasse abgedichtet sind, und
dass wenigstens zwischen zwei Aufnahmekanälen (20) eine sich parallel zu diese erstreckende Rinne (22) vorgesehen ist, welche sich nicht so tief wie die Aufnahmekanäle in das Abstandselement hineinerstrecken.

2. Kabeleinführung nach Anspruch 1, des Weiteren umfassend einen hohlen Durchführungskörper (1) zur Aufnahme des Abstandselementes (2).

3. Kabeleinführung nach Anspruch 2, wobei der hohle Durchführungskörper (1) als ein das Abstandselement (2) aufnehmendes rohrförmiges Gehäuse mit einem sich im Wesentlichen über das ganze Gehäuse erstreckenden Längsabschnitt mit gleich bleibendem Innendurchmesser ausgebildet ist, mit einer an einem Ende des Gehäuses angeordnete, von dem Abstandselement (2) beabstandeten Durchtrittsöffnung (30) für die Kabelleitung.

4. Kabeleinführung nach Anspruch 3, wobei an der Innenwand des Gehäuses einen Halteabschnitt zur Anlage des Abstandselementes (2) im Inneren des Gehäuses ausgebildet ist.

5. Kabeleinführung nach einem der Ansprüche 3 oder 4, wobei das Gehäuse (1) wenigstens im Bereich einer Aufnahmeöffnung(30) der Kabelleitung dicht ausgebildet ist.

6. Kabeleinführung nach einem der Ansprüche 2-5, wobei der Durchführungskörper einstückig ausgebildet ist.

7. Kabeleinführung nach einem der Ansprüche 3-6, wobei die Außenabmessung des Abstandselementes (2) im Wesentlichen der Innenabmessung des Gehäuses (1) entspricht.

8. Kabeleinführung nach einem der Ansprüche 3-7, wobei der Abstandshalter sowie ein zwischen dem Abstandshalter und der Eintrittsöffnung der Kabelleitung in das Gehäuse vorhandener Hohlraum durch die Vergussmasse abgedichtet ist.

9. Kabeleinführung nach einem der Ansprüche 3-8, wobei eine Seite des Gehäuses mit einem Steckerelement ausgebildet ist.

10. Kabeleinführung nach einem der Ansprüche 1-9, wobei der Querschnitt der Aufnahmekanäle von der Außenoberfläche des Abstandselementes zum Kanalboden sich kontinuierlich verringert.

11. Kabeleinführung nach Anspruch 10, wobei die Aufnahmekanäle mit einem halbrund oder rechteckig ausgebildeten Bodenbereich ausgebildet sind.

12. Kabeleinführung nach Anspruch 11, wobei jeder Aufnahmekanal an einem Endes des Abstandelementes einen Eingangsbereich aufweist, welcher im Querschnitt größer als der restliche Aufnahmekanal ausgebildet ist.

13. Kabeleinführung nach einem der Ansprüche 1-12, wobei das Abstandselement des Weiteren wenigstens eine sich der Länge nach durch das Abstandselement erstreckende Bohrung aufweist.

14. Kabelführung nach einem der Ansprüche 1-13, wobei der Abstandshalter als Buchse einer Steckverbindung ausgebildet ist.

15. Kabeleinführung nach einem der Ansprüche 1-14, wobei die Kabeleinführung als Leitungseinführung für ein Leuchtengehäuse, insbesondere eine Bodenleuchte, einsetzbar ist.

## Claims

1. Cable entry for a component housing having a spacer element (2) and having a cable line (4) comprising a plurality of insulated individual cores (3), the individual cores (3) being separated and guided by the spacer element (2) and a region of the individual cores (3) that is free of insulation layers being sealed at least in portions by means of a casting compound, the spacer element (2) being designed as a substantially circular element which extends in the longitudinal direction and has, radially on its outer surface, open, longitudinally extending receiving channels (2) for receiving the individual cables (3), which channels extend into the spacer element to a predetermined depth, the cable entry being **characterised in that** the receiving channels (20) are formed at a predetermined spacing from one another in the longitudinal direction in the outer surface of the spacer element, **in that** the region of each individual core (3) that is free of insulation layers is arranged within the receiving channels (20), **in that** the receiving channels (2) and the individual cores (3) guided therein are completely sealed by the casting compound, and **in that** a groove (22) is provided at least between two receiving channels (20) and extends in parallel with said channels, which groove does not extend into the spacer element as far as the receiving channels.

2. Cable entry according to claim 1, further comprising a hollow bush body (1) for receiving the spacer element (2).

3. Cable entry according to claim 2, wherein the hollow bush body (1) is designed as a tubular housing which receives the spacer element (2), has a longitudinal portion with a constant inner diameter that extends substantially over the entire housing, and has a passage opening (30) for the cable line that is arranged at one end of the housing and spaced apart from the spacer element (2).

4. Cable entry according to claim 3, wherein on the inner wall of the housing, a holding portion for contact with the spacer element (2) is formed in the interior of the housing.

5. Cable entry according to either claim 3 or claim 4, wherein the housing (1) is tight at least in the region of a receiving opening (30) of the cable line.

6. Cable entry according to any of claims 2-5, wherein the bush body is formed in one piece.

7. Cable entry according to any of claims 3-6, wherein the outer dimension of the spacer element (2) substantially corresponds to the inner dimension of the housing (1).

8. Cable entry according to any of claims 3-7, wherein the spacer and a cavity between the spacer and the inlet opening of the cable line into the housing is sealed by the casting compound.

9. Cable entry according to any of claims 3-8, wherein one side of the housing has a plug element.

10. Cable entry according to any of claims 1-9, wherein the cross section of the receiving channels continuously decreases from the outer surface of the spacer element to the channel base.

11. Cable entry according to claim 10, wherein the receiving channels have a semicircular or rectangular base region.

12. Cable entry according to claim 11, wherein each receiving channel has, at one end of the spacer element, an input region which is larger in cross section than the rest of the receiving channel.

13. Cable entry according to any of claims 1-12, wherein the spacer element further comprises at least one hole extending longitudinally through the spacer element.

14. Cable entry according to any of claims 1-13, wherein the spacer is designed as a socket of a plug connection.

15. Cable entry according to any of claims 1-14, wherein the cable entry can be used as a line entry for a lamp housing, in particular a floor lamp.

## Revendications

1. Passage de câble pour boîtier de composant avec un élément d'écartement (2) et avec une ligne de câble (4) composée de plusieurs fils individuels isolés (3), les fils individuels (3) étant séparés et guidés par l'élément d'écartement (2) et une zone des fils individuels (3) exempte de couche isolante étant scellée au moins par sections avec une masse d'étanchéité, l'élément d'écartement (2) étant conçu comme élément sensiblement rond, s'étendant longitudinalement, qui présente radialement sur sa surface extérieure des canaux de réception (2) ouverts, s'étendant longitudinalement, pour recevoir les différents câbles (3), qui s'étendent sur une profondeur prédéterminée dans l'élément d'écartement,
dans lequel le passage de câble est **caractérisé en ce que**
les canaux de réception (20) sont formés longitudinalement dans la surface extérieure de l'élément d'écartement à une distance prédéterminée les uns des autres,
**en ce que** la zone de chaque noyau individuel (3) qui est exempte d'une couche isolante est disposée à l'intérieur des canaux de réception (20),
**en ce que** les canaux de réception (2) et les fils individuels (3) qui y sont guidés sont complètement scellés par la masse de coulée, et
**en ce qu'**un canal (22) s'étendant parallèlement à celui-ci est prévu au moins entre deux canaux de réception (20), qui ne s'étendent pas dans l'élément d'écartement aussi profondément que les canaux de réception.

2. Passage de câble selon la revendication 1, comprenant en outre un corps de passage (1) pour recevoir l'élément d'écartement (2).

3. Passage de câble selon la revendication 1, **caractérisé en ce que** le corps de passage (1) est conçu comme un boîtier tubulaire recevant l'élément d'écartement (2) et présentant une section longitudinale s'étendant sensiblement sur tout le boîtier avec un diamètre intérieur constant, avec une ouverture de passage (30) pour la ligne de câble disposée à une extrémité du boîtier et espacée de l'élément d'écartement (2).

4. Passage de câble selon la revendication 3, dans lequel une section de retenue pour l'appui de l'élément d'écartement (2) à l'intérieur du boîtier est formée sur la paroi intérieure du boîtier.

5. Passage de câble selon l'une des revendications 3 ou 4, le boîtier (1) étant formé de manière étanche au moins dans la zone d'une ouverture de réception (30) pour la ligne de câble.

6. Passage de câble selon l'une des revendications 2 à 5, dans lequel le corps de passage est constitué d'une seule pièce.

7. Passage de câble selon l'une des revendications 3 à 6, dans lequel la dimension extérieure de l'élément d'écartement (2) correspond sensiblement à la dimension intérieure du boîtier (1).

8. Passage de câble selon l'une des revendications 3 à 7, dans lequel l'élément d'écartement et une cavité existant entre l'élément d'écartement et l'ouverture d'entrée de la ligne de câble dans le boîtier sont scellées par la masse d'étanchéité.

9. Passage de câble selon les revendications 3 à 8, où un côté du boîtier est constitué d'un élément enficheable.

10. Passage de câble selon l'une des revendications 1 à 9, dans lequel la section des canaux de réception est réduite en continu de la surface extérieure de l'élément d'écartement jusqu'au fond du canal.

11. Passage de câble selon la revendication 10, dans lequel les canaux de réception sont formés avec une surface de base semi-circulaire ou rectangulaire.

12. Passage de câble selon la revendication 11, dans lequel chaque canal de réception à une extrémité de l'élément d'écartement présente une zone d'entrée qui est formée avec une section transversale plus grande que le canal de réception restant.

13. Passage de câble selon l'une des revendications 1 à 12, dans lequel l'élément d'écartement présente en outre au moins un alésage s'étendant longitudinalement à travers l'élément d'écartement.

14. Passage de câble selon l'une des revendications 1 à 13, dan lesquel l'élément d'écartement est conçu comme douille de connexion à fiche.

15. Passage de câble selon l'une des revendications 1 à 14, dans lequel le passage de câble peut être utilisée comme passage de ligne pour boîtier d'éclairage, en particulier un lampadaire.
